Europäisches Patentamt

European Patent Office

Office européen des brevets

(11) Publication number: **0 037 640**

A1

## (12) EUROPEAN PATENT APPLICATION

(21) Application number: **81300926.3**

(22) Date of filing: **05.03.81**

(51) Int. Cl.³: **C 09 D 9/00**
**C 09 D 5/00**

(30) Priority: **08.03.80 GB 8007923**

(43) Date of publication of application:
**14.10.81 Bulletin 81/41**

(84) Designated Contracting States:
**BE CH DE FR GB IT LI LU NL SE**

(71) Applicant: **BRENT CHEMICALS INTERNATIONAL
LIMITED
Ridgeway
Iver Buckinghamshire(GB)**

(72) Inventor: **Burden, Peter
26 Culham Drive
Maidenhead Berkshire SL6 7PP(GB)**

(72) Inventor: **Hemmings, Jennifer Ann
2 Lawn Mansions Gondar Gardens
London NW6(GB)**

(72) Inventor: **Whitton, Colin Alfred
44 Talbot Road
Ashford Middlesex(GB)**

(74) Representative: **Lawrence, Peter Robin
Broughton et al,
Gill, Jennings & Every 53-64 Chancery Lane
London WC2A 1HN(GB)**

(54) Compositions and methods for forming and removing coatings.

(57) Compositions for removing a cross-linked film comprising aqueous ammonia or other suitable reagent, a water-immiscible organic solvent and a stabiliser for stabilising the composition. The film may be removed by treatment with such a solution, generally followed by treatment with an aqueous solution of ammonia, optionally containing complexing agent and surfactant. The initial film may be formed from an aqueous dispersion of a polymer including means for providing decomposable cross-linking, surfactant and plasticiser including a mixture of an alkylene glycol monoalkyl ether and a dialkylene glycol monoalkyl ether in a total amount of at least 7%.

EP 0 037 640 A1

1  BRENT CHEMICALS INTERNATIONAL
LIMITED    GJE 6080/34

COMPOSITIONS AND METHODS FOR FORMING AND REMOVING COATINGS

It is well known to form temporary protective films on surfaces by applying and drying onto the surface a coating composition comprising an aqueous dispersion (including emulsion) of an acrylic polymer that is cross-linked or can cross-link on drying of the coating.  Such coatings are intended to be removed subsequently.  For instance they may be used to provide a temporary glossy finish on floorings.  Many such coatings involve the use of a polymer that cross-links with metal, such as zinc, and removal of the coating involves the use of, for instance, solutions of ammonia in water.

Unfortunately removal becomes more difficult with increasing age of the coating.  Generally rather concentrated solutions, e.g. containing at least 2% ammonia measured as $NH_3$, are needed and even then severe manual agitation is usually required.

A particular problem arises when the surfaces are to be subjected to external use, for instance when they are the surfaces of road vehicles (for instance painted or unpainted metal or curtain-sided)  or the outer surfaces of buildings or signs.  Since such surfaces are often of rather complex shape, especially compared to conventional flat indoor flooring, it is necessary to be able to remove the compositions quite easily as otherwise removal from parts of the surfaces that are difficult to reach would be very time-consuming.  Unfortunately, the compositions tend to be much more difficult to remove, even from flat surfaces, than the compositions on indoor floors and other surfaces.  This may be partly due to the fact that the compositions are designed to stand up to the rigours of exposure to external conditions, but partly the extra difficulty appears to arise from other causes.  Possibly the external conditions, for instance sunshine, result in additional polymerisation of the film-forming ingredients of the composition, possibly by a mechanism involving cross-

2

linking of a type that is not attacked by ammonia. Whatever the reason; conventional aqueous ammonia either is incapable of removing the film or will only remove the film when applied with vigorous brushing or other agitation, and this is impracticable on many surfaces.

It might be thought that improved removal would be obtained if the film was first softened by an organic solvent before applying any ammonia. In some instances, this solvent pre-treatment can indeed result in easier removal of part of the film. However, we have surprisingly found that total removal of the film is then more difficult to achieve than when aqueous ammonia is used alone, without this solvent pre-treatment. Since it is essential to achieve total removal, this pre-treatment with organic solvent is therefore undesirable.

A composition according to the invention which is suitable for removing or penetrating a film of polymeric material cross-linked by metal comprises a reagent for destroying the metal cross-linking, preferably ammonia, and water and is characterised by being a stable, substantially homogeneous composition containing a water-immiscible organic solvent and stabiliser for stabilising the aqueous composition.

The amount of water is generally below 30% and in particular is generally the minimum necessary for forming a stable composition containing the chosen reagent, solvent and other ingredients. The amount of organic solvent is generally from 30 to 80% by weight, most usually 40 to 70%.

The reagent for destroying the metal cross-linking generally includes ammonia, or an ammonium salt but preferably includes also an amine or amine salt. The amine is generally an alkanolamine in which the or each alkanol group preferably contains not more than 4 carbon atoms. Preferably the composition includes both ammonia and, as the alkanolamine, triethanolamine. The ammonia is usually introduced as ammonium hydroxide

3

in an amount sufficient to provide 0.05 to 3%, preferably 0.1 to 1%, by weight ammonia measured as $NH_3$ based on the weight of the composition. Alkanolamine is preferably present in an amount of 2 to 10%, preferably 3 to 7%, by weight.

The solvent is generally a hydrocarbon solvent which may be aliphatic but preferably at least 50%, more preferably at least 75%, by weight of the solvent is an aromatic hydrocarbon. Suitable aromatic hydrocarbons are alkyl-substituted benzenes, preferably trimethylbenzene. This may be supplied as a commercial mixture contaminated with, for instance, small amounts of aliphatic hydrocarbons. Naphthenic hydrocarbons may be used as part or all of the aromatic hydrocarbon.

The composition should be stable and substantially homogeneous, in that the aqueous and organic phases should not rapidly separate. Accordingly the composition must contain stabiliser for stabilising it as a homogeneous composition. Generally a mixture of stabilisers is used, normally a mixture of nonionic and anionic surfactants.

Any nonionic surfactant which is included in the composition may be an alkylphenol alkylene oxide condensate but preferably is an alkoxylated alcohol such as an ethoxylated linear primary alcohol. The amount of nonionic surfactant should be from 5 to 14%, preferably 7 to 9%, by weight of the softening composition.

Any anionic surfactant which is included is preferably an alkali metal salt of an alkylbenzene sulphonate, most preferably dodecylbenzene sulphonate and is generally formed in situ by introducing the free acid and an alkali metal compound. The alkali metal is preferably potassium. The amount of anionic surfactant should be from 3 to 14%, preferably 4 to 10%, by weight of the softening composition.

Generally it is desirable to include an acid, for instance acetic or other organic or weak acid, typically in an amount of from 0.05 to 2%, generally

4

0.1 to 0.5%, by weight.

The precise proportions of the various ingredients will depend upon, for instance, the nature and the amount of the aromatic solvent. We have found that a convenient way of achieving a stable homogeneous composition in the form of a micro-emulsion is to mix the water and solvent together and then add the non ionic surfactant and then the amine and then either the anionic surfactant or the free acid form of this together with alkali metal compound, the mixing being accompanied by vigorous agitation so as to obtain a gel. The acid is then added and this breaks the gel to form a liquid to which the ammonia ( or ammonium compound) is then added.

The stable composition may be applied to the surface coated with the film that is to be removed and the film then removed from the surface. The composition may be applied by, for instance, spray, brush or swab. Some removal of the film may be achieved by vigorous agitation of the surface after the composition has soaked into it for, for instance, 5 to 10 minutes but preferably after such a soaking time the complete removal of the film is promoted by applying to the surface an aqueous treatment solution. This solution may merely be an aqueous solution of a reagent for destroying the cross-linking, for instance a conventional dilute solution of ammonia, but preferably the solution contains also a complexing agent and a surfactant.

The amount of ammonia or other reagent is typically 0.1 to 3%, preferably 0.5 to 1%, measured as $NH_3$, based on the solution. Generally it is introduced as ammonium hydroxide but ammonium salts can be used instead.

The amount of complexing agent is typically 0.2 to 4%. The complexing agent may, for instance, be the sodium or other suitable salt of nitrilotriacetic acid or ethylenediaminetetraacetic acid or any other complexing agent that is useful for the treatment of hard

5

water and for complexing with zinc or other cross-linking metal of the type present in the film.

The surfactant is generally present in an amount of 0.2 to 3% by weight of the solution. It is preferably a nonionic surfactant, for instance any of those discussed above. Preferably it is an ethoxylated alcohol.

This teatment solution may be applied to the surface by brushing or spraying, preferably using a low pressure spray. The usual contact time is 5-10 minutes.

Finally the resultant film and film residues are removed by agitation, preferably by means of pressure water spray, for instance having a pressure of at least 1380 $kN.m^{-2}$.

The film that is removed by the composition and method of the invention is generally a film formed from an aqueous dispersion of a polymer including means for providing decomposable cross-linking of the polymer, plasticiser and surfactant. Materials suitable for use as the components of such compositions are well known in the literature and reference may be made to, for instance, British Patent Specifications Nos. 1,127,185, 1,250,614, 1,256,050, 1,349,741, 1,508,411 and 1,548,496 and US Patent Specification No. 3,835,078.

The polymer may comprise a vinyl homopolymer or copolymer of a type that can be solubilised in ammonia or other alkali but preferably the aqueous dispersion of polymer comprises a dispersion of an acrylic polymer. This may be a homopolymer or copolymer. Thus it may be an acrylic, carboxylated acrylic or modified acrylic

6

polymer. The preferred polymers are styrene-acrylic copolymers. Blends of acrylic polymer with vinyl copolymer and/or with other polymers, for instance polyethylene or waxes or both may be used.

The aqueous dispersion may be of coarse particle size, such that it is truly called a dispersion, but preferably is of very fine particle size such that it would normally be called an emulsion.

The aqueous dispersion must include means for providing decomposable cross-linking of the polymer. Some at least of the cross-linking may already be present in the polymer in the composition that is applied to form the film but some at least of the cross-linking will normally occur after application of the composition. The cross-linking must be such that can be chemically destroyed by reaction with suitable reagents. Accordingly although cross-linking can be between adjacent olefin groups preferably the means for providing decomposable cross-linking include metallic cross-linking agents that will cross-link through the metal atoms in known manner. Suitable metals include zinc and zirconium and may be introduced in the dispersions as simple ions but more usually as ionic complexes, e.g. the zinc amine ion.

In order that the coatings obtained from the compositions have good water resistance and wear resistance it is preferred that the polymer should have a film-forming temperature of between $35^{\circ}C$ and $75^{\circ}C$. Preferably the polymer is such that a clear film is produced.

The amount of acrylic or other polymer solids in the composition is generally from 10 to 30%, e.g. about 20%, by weight and this is generally provided by forming the composition by introducing from 30 to 50% of a 30 to 50% aqueous dispersion. Suitable polymer emulsions include acrylic materials which have minimum film-forming temperatures of $50^{\circ}C$ to $73^{\circ}C$ and aqueous styrene-acrylic emulsions which have minimum film-forming

7

temperatures of 40°C to 60°C.    Preferably the emulsions contain zinc as cross-linking agent.

The surfactant preferably includes a fluorinated surfactant such as an alkali metal salt of a fluorinated benzene sulphonate or a fluorinated alkyl carboxylate. Suitable amounts are 0.01 to 0.05%.

Foam-suppressing surfactants, such as alkylphenols condensed with alkylene oxide are preferably included in amounts of 0.5 to 5% to suppress foam.    The amount of alkylene oxide is generally small, e.g. 1 to 4 moles per mole phenol, and a  suitable  material is nonylphenol condensed with 1.5 moles of ethylene oxide.

The plasticiser may be a permanent plasticiser (i.e. one that remains in the film) or a temporary plasticiser (i.e. one that is sufficiently volatile that it evaporates).  Preferably a mixture of permanent and temporary plasticisers is used.   Suitable plasticisers include tributoxyethyl phosphate, pyrrolidone, dibutyl phthalate, glycols, glycol ethers and glycol ether acetates.    The amount of permanent plasticiser is generally 0.5 to 5%.

The composition may include compounds for promoting solubility of the polymer in the composition. For instance ammonia or other alkali may be included.

The composition may include preservative, e.g. formaldehyde.

Uniform protective films often cannot easily be obtained using the preferred polymers when using permanent plasticiser and surfactant and when the amount of temporary plasticiser is that normally used in known compositions for making temporary protective films, e.g. 0 to 2%.   Accordingly it is preferred to have more temporary plasticiser, usually at least 5% but generally below 20% (based on the total composition).  Preferably the amount is between 7 and 14%, most preferably about 10%.

The preferred temporary plasticisers are alkylene glycol monoalkyl ethers and dialkylene glycol

8

monoalkyl ethers, the alkylene and dialkylene groups preferably being, respectively, ethylene and diethylene. The alkyl groups may contain up to, for instance, 4 carbon atoms. Preferred temporary plasticisers are therefore ethylene glycol monobutyl ether and diethylene glycol monobutyl ether. We find that optimum results are obtained when a mixture of these two classes of temporary plasticisers is used. The mixture gives optimum coating and drying characteristics with minimum toxicity hazards. Suitable amounts of each plasticiser in the mixture are 2 to 10%, preferably 3 to 8%, by weight of the total composition.

Compositions containing such mixed temporary plasticisers form a further part of the invention.

Although such compositions can be applied to form permanent coatings on porous surfaces, for instance by spraying or brush, and can be kept clean by washing with mild alkali, they are preferably used to form removable protective films on non-porous surfaces such as ship superstructures, lorries and other road vehicles, and road signs.

For such surfaces application can be by, for instance, brush coating but preferably is by low pressure (e.g. 35-70 $kN.m^{-2}$) spray. If the film is to be easily removable it must not be too thick and preferably therefore the aqueous composition is applied onto the surface under conditions such that the wet film thickness is from 10 to 40 microns, most preferably about 12 to 20 microns.

The composition and coating conditions should be such that substantially no curing of the composition occurs before this film thickness is attained. Thus if a greater thickness is applied and drainage to provide the desired thickness then occurs, curing must not start to any significant extent until drainage has been completed. Preferably therefore there is substantially no curing for at least 5 minutes and often up to 15 or even 30 minutes after application.

After application and, if necessary, drainage to the desired thickness, the coating is allowed to dry and cure onto the surface. Drying and curing is promoted by providing good ventilation since that appears to remove evaporated solvent and permit further evaporation to occur rapidly.

In a typical process the surface to be coated, for instance the painted surface of a lorry, is cleaned with an alkaline cleaner in conventional manner to remove grease and other dirt, is allowed to dry and is then sprayed using an air-driven system to provide a low pressure wide cone of a suitable film-forming liquid composition.

An example of a preferred coating composition. is:

| | |
|---|---|
| Aqueous emulsion containing 40% of a zinc cross-linked styrene-acrylic copolymer | 35% |
| Tributoxyethyl phosphate | 1.0% |
| Ethylene glycol monoalkyl ether | 6.0% |
| Diethylene glycol monoalkyl ether | 3.0% |
| Fluorinated alkyl carboxylate | 0.02% |
| Nonylphenol condensed with 1.5 moles ethylene oxide | 1.5% |
| Water | 53.48% |

The wet film is allowed to drain for 15 to 30 minutes in still air indoors at ambient temperature, to give a final wet film thickness of 12 to 20 microns. The wet film is then exposed to strong ventilation, e.g. natural air movement, outdoors, and will become touch dry in a further 15 minutes to half an hour and fully dry within 1 to 2 hours.

The resultant coating gives the surface a glossy appearance similar to that of fresh paint, but at very much lower cost. The film can be cleaned when necessary using a mild alkali cleaner. When the appearance of the film is deteriorating, for instance after six months external use, it can be removed using the penetrant composition and method of the invention.

10

In a typical process, a lorry carrying a coating as described above and which has been subjected to the external atmosphere for about six months is sprayed with a softening composition consisting of

| | |
|---|---|
| Aromatic solvent comprising trimethylbenzene | 40.0% |
| Ethoxylated linear primary alcohol | 9.0% |
| Triethanolamine | 5.0% |
| Potassium dodecylbenzene sulphonate | 10.0% |
| Ammonia s.g. 0.88 | 1.0% |
| Acetic acid | 0.2% |
| Water | 21.8% |

This composition may have been made by mixing the aromatic solvent and water, adding in sequence with vigorous mixing the ethoxylated alcohol, triethanolamine, dodecylbenzene sulphonic acid and potassium hydroxide to form a gel, followed by addition of acetic acid to break the gel to form a stable liquid to which the ammonia is added.

After applying the composition to the lorry surface it is left to soak for 5 to 10 minutes and the lorry is then sprayed with a second solution consisting of

| | |
|---|---|
| Complexing agent (EDTA) | 2.0% |
| Ammonia s.g. 0.88 | 1.0% |
| Ethoxylated primary alcohol | 1.0% |
| Water | 96.0% |

Finally it is subjected to a pressure water spray, and this process removes the protective film. A fresh application of protective film can then be applied, in the manner described above.

11

<u>CLAIMS</u>

1.      A composition suitable for removing or penetrating a film of polymeric material cross-linked by metal, and which comprises a reagent for destroying the metal cross-linking, preferably ammonia, and water and which is characterised by being a stable, substantially homogeneous composition containing a water-immiscible organic solvent and stabiliser for stabilising the aqueous composition.

2.      A composition according to claim 1 characterised in that it contains below 30% by weight water and 30 to 80% by weight organic solvent, preferably hydrocarbon solvent.

3.      A composition according to claim 1 characterised in that most at least of the organic solvent is an aromatic hydrocarbon solvent, preferably trimethylbenzene.

4.      A composition according to any of claims 1 to 3 characterised in that it contains from 2 to 10% by weight alkanolamine, preferably triethanolamine.

5.      A composition according to any of claims 1 to 4 characterised in that it contains non-ionic surfactant, preferably an alkylphenol  alkylene oxide condensate or an alkoxylated alcohol.

6.      A composition according to any of claims 1 to 5 characterised in that it contains an anionic surfactant, preferably an alkylbenzene  sulphonate.

7.      A composition according to claim 5 or claim 6 characterised in that it contains from 5 to 14% of an ethoxylated alcohol and from 3 to 14% of a dodecylbenzene sulphonate.

8.    A method of removing from a surface a film of polymeric material cross-linked by metal, the method comprising applying an aqueous composition containing a reagent for destroying the metal cross-linking, preferably ammonia, and then removing the film, characterised in that the aqueous composition is a composition according to any of claims 1 to 7.

9.    A method according to claim 8 in which the removal of the film is promoted by applying to the surface, after treatment with the said composition, an aqueous solution of a reagent for destroying the cross-linking, preferably ammonia.

10.    A method according to claim 9 characterised in that the aqueous solution also includes complexing agent, preferably nitrilotriacetic acid or ethylenediaminetetraacetic acid, and surfactant, preferably a nonionic surfactant.

11.    A method according to claim 10 characterised in that the solution contains at least 90% by weight water, 0.5 to 3% ammonia, 0.5 to 4% complexing agent and 0.5 to 3% surfactant.

12.    A method according to any of claims 8 to 11 characterised in that removal of the film is substantially completed by spraying the treated surface with water.

13.    A method according to any of claims 8 to 12 characterised in that the film is a substantially clear film over the surface of a road vehicle.

14.    A composition for forming a water and wear-resistant removable film on a surface, comprising an aqueous dispersion of a polymer including means for providing decomposable cross-linking of the polymer, plasticiser and surfactant, characterised in that the composition includes as temporary plasticiser a mixture of an alkylene glycol monoalkyl ether and an dialkylene glycol monoalkyl ether, preferably ethylene glycol monobutyl ether and diethylene glycol monobutyl ether each in an amount of at least 2% with the total amount of temporary plasticiser being at least 7%.

## DOCUMENTS CONSIDERED TO BE RELEVANT

| Category | Citation of document with indication, where appropriate, of relevant passages | Relevant to claim |
|---|---|---|
| A | <u>AU - B - 410 709</u> (S.C. JOHNSON)<br>* Claims 1,18-20 *<br><br>-- | 1 |
| A | <u>BE - A - 499 286</u> (D. SENNESAEL)<br>* Claims 1-4 *<br><br>---- | 1 |

**CLASSIFICATION OF THE APPLICATION (Int. Cl.³)**

C 09 D    9/00
          5/00

**TECHNICAL FIELDS SEARCHED (Int. Cl.³)**

C 09 D    9/00
          9/04
          5/00
          5/20

**CATEGORY OF CITED DOCUMENTS**

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| The Hague | 20-07-1981 | DE ROECK |

EPO Form 1503.1   06.78